# EUROPEAN PATENT SPECIFICATION

(11) **EP 4 685 118 B1**
(45) Date of publication and mention of the grant of the patent: **28.10.2026**
(21) Application number: 24382800.1
(22) Date of filing: 23.07.2024
(51) Int. Cl.: C03B 5/235, C03B 5/24, C03B 7/00, C03B 7/08, C03B 7/084, C03B 7/086

(54) **METHOD AND SYSTEM FOR ADJUSTING THE VISCOSITY OF MOLTEN GLASS DURING THE FORMATION OF MOLTEN GLASS GOBS USED FOR MANUFACTURING GLASS CONTAINERS**
VERFAHREN UND SYSTEM ZUR EINSTELLUNG DER VISKOSITÄT VON GESCHMOLZENEM GLAS WÄHREND DER FORMUNG VON GESCHMOLZENEN GLASTROPFEN ZUR HERSTELLUNG VON GLASBEHÄLTERN
PROCÉDÉ ET SYSTÈME POUR RÉGLER LA VISCOSITÉ DE VERRE FONDU PENDANT LA FORMATION DE PARAISONS DE VERRE FONDU UTILISÉES POUR LA FABRICATION DE RÉCIPIENTS EN VERRE

(43) Date of publication of application: 28.01.2026
(73) Proprietor: Vidrala, S.A., 01400 Llodio (ES)
(72) Inventor: PEÑA MANGAS, David, 01400 LAUDIO (ES); IRIZAR GONZÁLEZ, Liher, 01400 LAUDIO (ES); MENOYO LARRAZABAL, Joseba, 01400 LAUDIO (ES); REGUERA BAKHACHE, Daniel, 20500 ARRASATE-MONDRAGON (ES); CERNUDA GARCÍA, Carlos, 20500 ARRASATE-MONDRAGON (ES)
(74) Representative: Galbaian S.Coop.

(56) References cited:
- EP-B1- 1 418 158
- JP-A- H0 859 251
- US-A- 4 708 729

## Description

### TECHNICAL FIELD

The present invention relates to the control of the viscosity of molten glass used in the manufacture of glass containers.

### PRIOR ART

Glass containers are manufactured on a production line having a hot zone and a cold zone. The hot zone starts in a furnace, in which raw materials (typically including sand, sodium carbonate, limestone and recycled glass) are melted into molten glass. Next, the molten glass is divided up into gobs and by means of a distributor, the gobs are directed by gravity to a forming machine, referred to as an IS machine (individual section forming machine), where glass containers are formed by means of a press-blow or blow-blow process.

Each gob falls into a preparatory mold of the forming machine in which a preform referred to as parison is formed. The parison is formed using a punch that pushes the molten glass inside the preparatory mold, or by blowing the glass for it to acquire the shape of the inside of the preparatory mold. The parison is inverted and transferred to a blowing mold, in which air is introduced inside the parison by means of a blower to impart the final shape of the glass container to same.

The glass containers are removed to a dead plate and are then directed to the final part of the hot zone where there is a lehr annealing oven that heats the glass containers and then slowly cools them for a specific period of time, for example, for one hour, to subject the glass to an annealing process that reduces the internal tensions of the glass and the likelihood of breakage. The containers are inspected in the cold zone to guarantee that they are free of defects, such as cracks, embedded fouling, bubbles or excessively thin walls, and finally, the glass containers are sent to a packaging area.

Control of molten glass gobs is key to obtaining defect-free glass containers. For example, EP1418158A1 shows a molten glass gob quality control device having a channel that directs molten glass, through a variable size section, into a spout having a feeder plunger to push the molten glass through an orifice of the spout to form molten glass gobs that are sent to moulds for manufacturing glass containers. The variable sized section between the melting furnace and the spout is modified by a rotating tube which is vertically movable. At the outlet of the orifice of the spout there are high-speed cameras that obtain images of the gobs from which the gob weight can be estimated. US4708729A gives an example of an electronic system to automatically control the weight and shape of glass gobs in a molten glass feeder, of the type that includes a glass feeder bowl which has at least one feeding orifice; a rotating tube at the feeder bowl, aligned with the orifice, and mounted in a mechanism that controls its rotation and height with respect to the orifice in order to homogenize the glass in the feeder bowl and regulate the passage of the glass towards the orifice.

The gob weight, determined from the camera images, is kept constant by displacements of the rotating tube that control the entry of the glass into the spout. Thus, when the weight of the molten glass gob is below a predefined weight, the rotating tube moves vertically upwards to increase the amount of glass passing into the spout, and when the weight of the molten glass goblet is above the predefined weight, the rotating tube moves vertically downwards to decrease the amount of glass passing into the spout.

### DISCLOSURE OF THE INVENTION

The object of the invention is to provide a method and a system for adjusting the viscosity of molten glass during the formation of molten glass gobs used to manufacture glass containers, as defined in the claims.

One aspect of the invention relates to a method for adjusting the viscosity of molten glass during the formation of molten glass gobs used for manufacturing glass containers.

The method comprises:
- supplying raw materials to a melting furnace to obtain molten glass,
- directing the molten glass, through a variable size section, into a spout having a feeder plunger to push the molten glass through an orifice of the spout to form the molten glass gobs which are sent to moulds for manufacturing the glass containers, wherein the variable size section is modified with a rotating tube **which is** vertically movable,
- determining the weight of molten glass gobs, and
- maintaining the weight of the molten glass gobs in a predefined weight range by:
   ∘ a vertical displacement of the rotating tube upward, which increases the variable size section, when the weight of the molten glass gob is below the predefined weight range, or
   ∘ a vertical displacement of the rotating tube downwards, which decreases the variable size section, when the weight of the molten glass gob is above the predefined weight range,

The method further comprises:
- determining the vertical displacement of the rotating tube, and
   ∘ increasing the temperature of the molten glass, decreasing its viscosity, when the rotating tube is moved vertically upwards, or
   ∘ decreasing the temperature of the molten glass, increasing its viscosity, when the rotating tube is moved vertically downwards, or
- determining the torque of the rotating tube, and
   ∘increasing the temperature of the molten glass, decreasing its viscosity, when the rotating tube rotates with a torque higher than a predefined torque, or
   ∘ decreasing the temperature of the molten glass, increasing its viscosity, when the rotating tube rotates at a torque lower than the predefined torque.

Another aspect of the invention relates to a system for adjusting the viscosity of molten glass during the formation of molten glass gobs used for manufacturing glass containers.

The system comprises:
- **a melting** furnace for obtaining molten glass from raw materials,
- a channel of the melting furnace which directs the molten glass, through a variable size section, into a spout having a feed plunger to push the molten glass through an orifice of the spout to form the molten glass gobs which are sent to moulds for manufacturing the glass containers, wherein the variable size section is modified with a rotating tube which is vertically movable, and
- a control unit configured to determine the weight of the molten glass gobs and to maintain the weight of the molten glass gobs in a predefined weight range by:
   ∘ a vertical displacement of the rotating tube upwards, which increases the variable size section, when the weight of the molten glass gob is below the predefined weight range, or
   ∘a vertical displacement of the rotating tube downwards, which decreases the variable size section, when the weight of the molten glass gob is above the predefined weight range,

The control unit is additionally configured to determine the vertical displacement of the rotating tube, and
∘ increase the temperature of the molten glass, decreasing its viscosity, when the rotating tube is moved vertically upwards, or
∘decrease the temperature of the molten glass, increasing its viscosity, when the rotating tube is moved vertically downwards, or
the control unit is additionally configured to determine the torque of the rotating tube, and
∘ increase the temperature of the molten glass, decreasing its viscosity, when the rotating tube rotates with a torque higher than a predefined torque, or
∘ decreasing the temperature of the molten glass, increasing its viscosity, when the rotating tube rotates at a torque lower than the predefined torque.

Accordingly, the invention proposes to adjust the viscosity of the molten glass gobs by increasing or decreasing the temperature of the molten glass as a function of the vertical displacement, or torque, of the rotating tube.

That is, the vertical displacements of the tube allow to keep the molten glass gobs within a predefined weight range, allowing more or less molten glass to pass into the spout, but despite controlling the weight, these displacements do not allow to control the viscosity of the glass, which may cause the molten glass gobs to stretch more or less at the outlet of the spout, and which may result in the production of glass containers with different properties. The invention proposes to keep the molten glass gobs within a predefined weight range by controlling the vertical displacements of the rotating tube, and in addition it also allows to keep the viscosity within a predefined viscosity range, obtaining more homogeneous glass containers. In addition, using the vertical displacements, or torque, of the rotating tube as an indirect indication of the viscosity of the glass allows the viscosity to be determined at a point close to gobs formation.

These and other advantages and features of the invention will become apparent in view of the figures and the detailed description of the invention.

### DESCRIPTION OF THE DRAWINGS

Figure 1 shows an example of a glass container production plant.
Figure 2 shows a schematic view of a molten glass gob feeder that receives molten glass from a melting furnace to form the gobs and direct them into moulds to form glass containers.
Figure 3 shows an example of the system used to adjust the viscosity of the glass as a function of the vertical displacements of the rotating tube.
Figure 4 shows another example of the system used to adjust the viscosity of the glass as a function of the torque of the rotating tube.

### DETAILED DISCLOSURE OF THE INVENTION

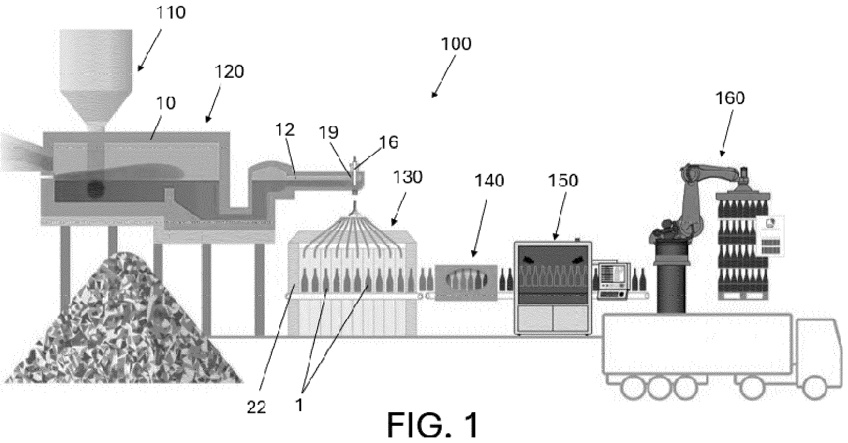

Figure 1 shows an example of a production plant 100 for glass containers 1. The plant comprises a raw material receiving area 110 in which the raw materials used to manufacture glass containers 1 are received, a melting area 120 in which the raw materials are melted to obtain molten glass, a forming area 130 in which the molten glass is transformed into glass containers 1, a treatment area 140 in which the containers 1 are thermally and superficially treated to prevent the formation of internal tensions and provide the glass with a higher degree of resistance, an inspection area 150 in which dimensional, functional and defect controls are performed in the containers 1 to check that they comply with the required quality demands, and a final packaging area 160 in which the glass containers 1 are grouped together on pallets for storage and transport.

In the reception area 110, the raw materials are received, and by means of conveyor belts they are taken to hoppers that supply the raw materials to the melting area 120, which has a melting furnace 10 where, by means of a heating device 11, the raw materials are melted at temperatures of over 1.000°C. By means of a channel 12, the molten glass is supplied in the form of gobs 13 to the forming area 130, obtaining a glass container 1 with each gob of molten glass 13.

The transformation of molten glass into glass containers, in the forming area 130, is carried out with forming machines 22 (called IS machines) which have a longitudinal arrangement with sections arranged in parallel, each section receiving at least one gob of molten glass, each gob being converted into a preform and subsequently into a glass container 1 in a so-called press-blow or blow-blow process.

The grouped containers 1 are sent to the treatment area 140 which has an annealing tunnel or "Lehr", which separates the container manufacturing line 100 into a hot zone and a cold zone. The hot zone extends from the melting area furnace 120 to the treatment area annealing tunnel 140, and the cold zone extends from the treatment area annealing tunnel 140 to the end of the manufacturing line in the final packaging area 160.

Thus, at the exit of the forming machine 22, the glass containers 1 are at a temperature above 650°C, and to avoid the formation of internal stresses, they are taken to the annealing tunnel or "Lehr", through which the glass containers 1 are slowly passed, reheated and then cooled. In the treatment area 140, the containers are subjected to various treatments. Subsequently, the glass containers 1 are transferred to the inspection area 150 where dimensional, functional and defect checks are carried out on the containers 1 to ensure that they meet the required quality requirements and finally the containers 1 are sent to the final packaging area 160.

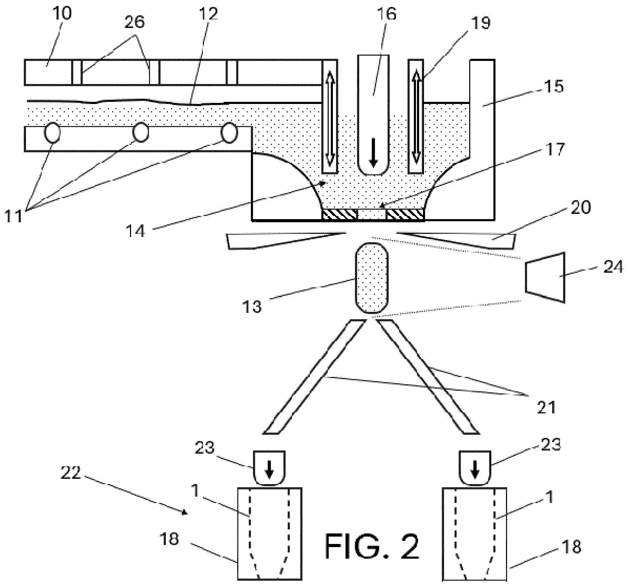

Figure 2 partially shows the channel 12 of the melting furnace 10 that directs the molten glass into a molten glass gob feeder that forms the molten glass gobs 13 to be directed into moulds 18 of the glass container forming machine 22.

As shown in Figure 2, the channel 12 directs the molten glass, through a variable size section 14, into a spout 15 which has a feeder plunger 16 to push the molten glass through an orifice 17 of the spout 15 to form the molten glass gobs 13 which are sent to the moulds 18 of the forming machine 22 to make the glass containers 1.

The variable size section 14, which is arranged between the melting furnace 10 and the spout 15, can be modified with a vertically movable rotating tube 19 to increase or decrease the variable size section 14 and to modify the amount of molten glass that can pass from the melting furnace 10 into the spout 15. Additionally, the rotating tube 19 has a predefined rotational speed and a predefined torque to mix the molten glass and obtain a homogeneous mixture in the spout 15. The rotational speed of the rotating tube 19 is controlled to maintain a constant rotational speed during the formation of the molten glass gobs 13.

The spout 15 has blades 20 that cut the molten glass as it exits the orifice 17, pushed by the feed plunger 16, to form the molten glass gobs 13 that are directed by gravity towards the moulds 18 of the forming machine 22 through gob distributors 21, such as channels or baffles. The cutting speed of the blades 20 can be synchronised with the speed of the feed plunger 16 to produce molten glass gobs 13 with a constant periodicity.

A high-speed camera 24 is provided at the outlet of the orifice 17 to obtain images of the molten glass gobs 13. Such images may be used to detect characteristics of the molten glass gob, such as, for example, the shape and dimensions of the gob 13.

The moulds 18 are the preparatory moulds of the forming machine 22 (I.S. machine) in the forming zone 130 where each gob of molten glass 13 is transformed into a preform (parison). The preform may be obtained by using a punch 23 that forces the molten glass gob into the preparatory mould (press), or by blowing the glass into the shape of the inside of the preparatory mould (blow). Subsequently, the preforms are inverted and transferred from the preparatory moulds to blowing moulds of the forming machine 22 where air is introduced into **the preforms** to give the final shape to the glass containers 1.

The weight of the molten glass gob 13 may be adjusted by varying the amount of molten glass flowing into the spout 15, and the amount of molten glass may be varied by varying the height position of the rotating tube 19, i.e. by varying the variable size section 14 between the furnace 10 and the spout 15.

Furthermore, the temperature of the molten glass in the glass melting furnace 10 can be adjusted within a temperature range (for example between 1.000-1.600 °C) so that the molten glass has a certain viscosity. For example, the melting furnace 10 has a heating device 11 to increase the temperature of the molten glass and a cooling device 26 to decrease the temperature of the molten glass. For example, the heating device 11 may be a burner or electrodes of the melting furnace 10 and the cooling device 26 may be a venting flap of the melting furnace 10 or a device for emitting cooling air into the melting furnace 10.

The invention proposes a method for adjusting the viscosity of molten glass during the formation of molten glass gobs 13 used to manufacture glass containers 1. The method for adjusting the viscosity of molten glass comprises:
- supplying raw materials to a melting furnace 10 to obtain molten glass,
- directing the molten glass, through a variable size section 14, into a spout 15 having a feeder plunger 16 to push the molten glass through an orifice 17 of the spout 15 to form the molten glass gobs 13 which are sent to moulds 18 for manufacturing the glass containers 1, wherein the variable size section 14 is modified with a rotating tube 19 which is vertically movable,
- determining the weight of molten glass gobs 13, and
- maintaining the weight of the molten glass gobs 13 in a predefined weight range by:
   ∘ a vertical displacement of the rotating tube 19 upwards, which increases the variable size section 14, when the weight of the molten glass gob 13 is below the predefined weight range, or
   ∘ a vertical displacement of the rotating tube 19 downward, which decreases the variable size section 14, when the weight of the molten glass gob 13 is above the predefined weight range.

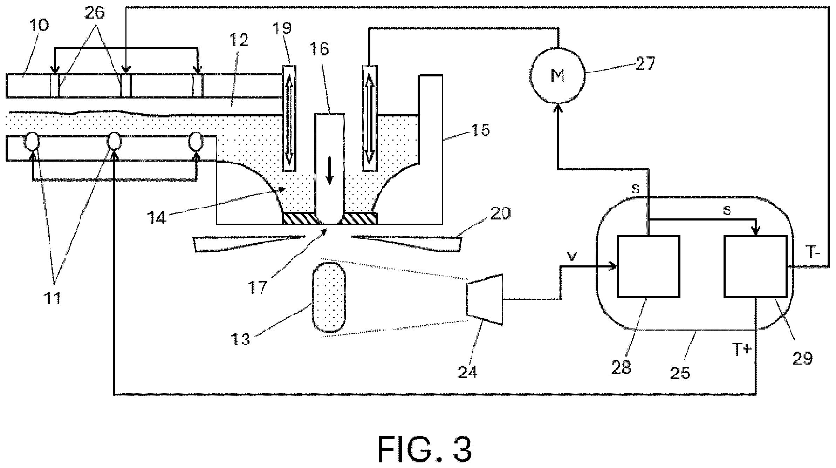

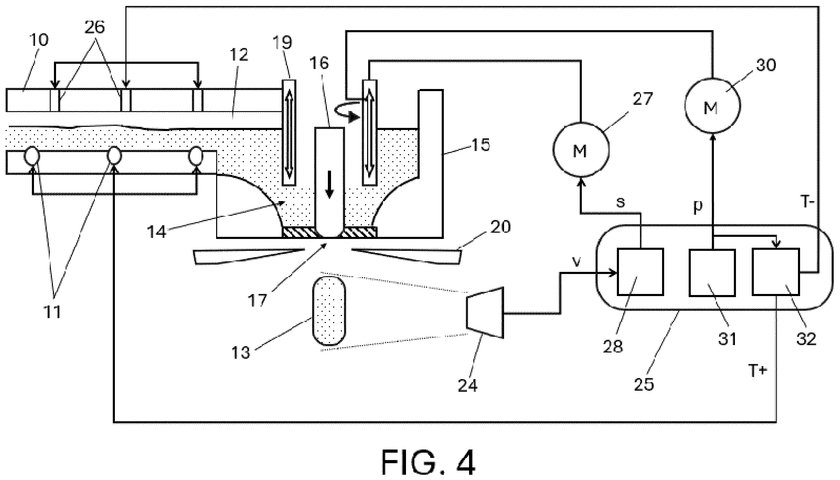

The method of the invention additionally proposes to adjust the viscosity of the molten glass gobs as a function of information provided by the rotating tube 19. Specifically, it is proposed **to adjust** the viscosity of the molten glass as a function of the vertical displacement of the rotating tube 19 (see Figure 3), or as a function of the torque of the rotating tube 19 (see Figure 4).

Accordingly, the method of the invention further comprises:
- determining the vertical displacement of the rotating tube 19, and
   ∘ increasing the temperature of the molten glass, decreasing its viscosity, when the rotating tube 19 is moved vertically upwards, or
   ∘ decreasing the temperature of the molten glass, increasing its viscosity, when the rotating tube 19 is moved vertically downwards, or, alternatively, the method further comprises:
- determining the torque of the rotating tube 19, and
   ∘ increasing the temperature of the molten glass, decreasing its viscosity, when the rotating tube 19 rotates with a torque higher than a predefined torque, or
   ∘ decreasing the temperature of the molten glass, increasing its viscosity, when the rotating tube 19 rotates at a torque lower than the predefined torque.

Preferably to increase the temperature of the molten glass a heating device 11 of the melting furnace 10 is activated, which may be a burner or an electrode of the melting furnace 10, and to decrease the temperature of the molten glass a cooling device 26 of the melting furnace 10 is activated, which may be a venting flap of the melting furnace 10 or a device for emitting cooling air into the melting furnace 10.

The invention also proposes a system for adjusting the viscosity of molten glass during the formation of molten glass gobs 13 used to manufacture glass containers 1. The system comprises
- a melting furnace 10 for obtaining molten glass from raw materials,
- a channel 12 of the melting furnace 10 which directs the molten glass, through a variable size section 14, into a spout 15 having a feed plunger 16 to push the molten glass through an orifice 17 of the spout 15 to form the molten glass gobs 13 which are sent to moulds 18 for manufacturing the glass containers 1, wherein the variable size section 14 is modified with a rotating tube 19 which is vertically movable, and
- a control unit 25 configured to determine the weight of the molten glass gobs 13 and to maintain the weight of the molten glass gobs 13 in a predefined weight range by:
   ∘ a vertical displacement of the rotating tube 19 upwards, which increases the **variable** size section 14, when the weight of the molten glass gob 13 is below the predefined weight range, or
   ∘ a vertical displacement of the rotating tube 19 downwards, which decreases the variable size section 14, when the weight of the molten glass gob 13 is above the predefined weight range.

The control unit 25 is additionally configured to determine the vertical displacement of the rotating tube 19, and
∘ increase the temperature of the molten glass, decreasing its viscosity, when the rotating tube 19 is moved vertically upwards, or
∘ decrease the temperature of the molten glass, increasing its viscosity, when the rotating tube 19 is moved vertically downwards, or, alternatively,
the control unit 25 is additionally configured to determine the torque of the rotating tube 19, and
∘ increase the temperature of the molten glass, decreasing its viscosity, when the rotating tube 19 rotates with a torque higher than a predefined torque, or
∘ decrease the temperature of the molten glass, increasing its viscosity, when the rotating tube 19 rotates at a torque lower than the predefined torque.

According to an example of the invention, the weight of the molten glass gobs 13 is determined by employing a high-speed camera 24 which obtains images of the molten glass gobs 13.

Preferably, the weight of the molten glass gobs 13 is obtained by the following expression: $p = d * v$ where:
p is the weight of the molten glass gobs 13,
v is the volume of the molten glass gobs 13 determined from the images obtained with the high-speed camera 24, and
d is the density of the molten glass. The density of the glass is known and can be determined from the raw materials supplied to the melting furnace 10.

According to another example of the invention, the weight of the molten glass gobs 13 is determined according to the displacement travelled by a punch 23 which forces the introduction of the molten glass gobs 13 into one of the moulds 18 in which the glass containers 1 are formed. In this case, the mould 18 corresponds to the preparatory mould of a glass container forming machine which obtains the containers by a press-blow process. In forming machines that use a blow-blow process, and which therefore do not have press-forming preparatory moulds, the weight is determined by the camera 24.

Figures 3 and 4 show two examples for adjusting the viscosity of the glass, where in both cases a camera 24 is used to estimate the weight of the molten glass gobs 13. Alternatively, as indicated above, in these examples the displacement travelled by the punch 23 can be used to determine the weight of the gobs.

In the example shown in Figure 3, the vertical displacement of the rotating tube 19 may be determined from a setpoint signal s generated by a control unit 25 which is sent to a motor 27 that moves the rotating tube 19 upwards or downwards.

As shown in said example of Figure 3, the camera 24 determines the volume v of the molten glass gobs 13 exiting the orifice 17 of the spout 15, and said volume v is sent to a first controller 28 of the control unit 25 which determines the weight of the molten glass gobs 13 based on the volume v determined by the camera 24 and a known density value of the molten glass. The first controller 28 compares the weight with a predefined weight range, and if the weight is not within the range, it generates a setpoint signal s which is sent to the motor 27 to vertically move the rotating tube 19 up or down until the weight of the molten glass gobs is within the range. Thus, when the gob weight is below the predefined weight range, the rotating tube 19 is moved vertically upwards to increase the amount of molten glass in the spout 15 and when the gob weight is above the predefined weight range, the rotating tube 19 is moved vertically downwards to decrease the molten glass in the spout 15.

The setpoint signal s may be a signal with a positive value for rotating the motor 27 in a direction in which the rotating tube 19 moves upwards, or a signal with a negative value for rotating the motor 27 in a direction in which the rotating tube moves downwards. The first controller 28 may be a PID controller for maintaining the weight of the molten glass gobs in the predefined weight range.

Additionally, and as shown in the example of Figure 3, the set point signal s generated by the first controller 28 is sent to a temperature controller 29 which generates a first trigger signal T+ and a second trigger signal T-, wherein the first trigger signal T+ activates the heating device 11 to increase the temperature of the molten glass when the rotating tube 19 moves vertically upwards, and the second trigger signal T- activates the cooling device 26 to decrease the temperature of the molten glass when the rotating tube 19 moves vertically downwards.

The first controller 28 and the temperature controller 29 may be part of the same control unit 25 or may be independent units located at the same or different locations.

The control unit 25 may be a controller, microcontroller, FPGA or other computationally capable device.

As indicated above, the viscosity of the glass can be estimated indirectly through the torque applied to rotate the rotating tube 19, instead of using the vertical displacements of the rotating tube 19.

As shown in Figure 4, the rotational speed of the rotating tube 19 is determined from a torque signal p generated by a control unit 25 which is sent to a motor 30 to rotate the rotating tube at a predefined rotational speed. For example, the same motor 27 can be used to vertically move the rotating tube 19 and to rotate it, or two independent motors 27 and 30 can be used as shown in the example in Figure 4.

Torque measurement may be done directly or indirectly. For example, the power consumption of the motor 30 may be measured to determine torque variations, force sensors may be employed, an encoder may be used to measure the rotational speed of the motor 30 and based thereon estimate torque, or other analogous ways may be employed.

As shown in such an example in Figure 4, the control unit 25 has a second controller 31 for rotating the rotating tube 19 at the predefined rotational speed. For example, the second controller 31 may compare the actual rotational speed of the rotating tube 19 with a setpoint speed to maintain the predefined rotational speed when the actual rotational speed of the rotating tube 19 is different from the setpoint speed. Thus, when the actual rotational speed of the rotating tube 19 is less than the setpoint speed, the second controller 31 generates a torque signal p which is sent to the motor 30 to increase the rotational speed to the predefined rotational speed (the torque value p sent being greater than the predefined rotational torque), and when the actual rotational speed of the tube 19 is greater than the setpoint speed, the second controller 31 generates another torque signa pl that is sent to the motor 30 to decrease the rotational speed until the predefined rotational speed is reached (the torque value p sent being less than the predefined torque). The second controller 31 may be a PID controller to keep the rotating tube 19 rotating at the predefined rotational speed.

Additionally, and as shown in the example of Figure 4, the torque signal p generated by the second controller 31 is sent to a temperature controller 32 which generates a first trigger signal T+ and a second trigger signal T-, wherein the first trigger signal T+ activates the heating device 11 to increase the temperature of the molten glass when the rotating tube 19 rotates with a torque higher than the predefined torque and the second trigger signal T-activates the cooling device 26 to decrease the temperature of the molten glass when the rotating tube 19 rotates with a torque lower than the predefined torque.

In this way, the torque signal p controlling the rotational speed of the rotating tube 19 is used to detect variations in the viscosity of the glass, since the higher the viscosity of the glass, the higher the torque must be to maintain the predefined rotational speed, and the lower the viscosity of the glass, the lower the torque must be to maintain the predefined rotational speed.

The first controller 28, the second controller 31 and the temperature controller 32 may be part of the same control unit 25 or be independent units located at the same or different locations.

## Claims

1. Method for adjusting the viscosity of molten glass during the formation of molten glass gobs (13) used for manufacturing glass containers (1), the method comprising:
- supplying raw materials to a melting furnace (10) to obtain molten glass,
- directing the molten glass, through a variable size section (14), into a spout (15) having a feeder plunger (16) to push the molten glass through an orifice (17) of the spout (15) to form the molten glass gobs (13) which are sent to moulds (18) for manufacturing the glass containers (1), wherein the variable size section (14) is modified with a rotating tube (19) which is vertically movable,
- determining the weight of molten glass gobs (13), and
- maintaining the weight of the molten glass gobs (13) in a predefined weight range by:
∘ a vertical displacement of the rotating tube (19) upwards, which increases the variable size section (14), when the weight of the molten glass gob (13) is below the predefined weight range, or
∘ a vertical displacement of the rotating tube (19) downwards, which decreases the variable size section (14), when the weight of the molten glass gob (13) is above the predefined weight range,
**characterised in that** the method further comprises:
- determining the vertical displacement of the rotating tube (19), and
∘ increasing the temperature of the molten glass, decreasing its viscosity, when the rotating tube (19) is moved vertically upwards, or
∘ decreasing the temperature of the molten glass, increasing its viscosity, when the rotating tube (19) is moved vertically downwards, or
- determining the torque of the rotating tube (19), and
∘ increasing the temperature of the molten glass, decreasing its viscosity, when the rotating tube (19) rotates with a torque higher than a predefined torque, or
∘ decreasing the temperature of the molten glass, increasing its viscosity, when the rotating tube (19) rotates at a torque lower than the predefined torque.

2. Method according to claim 1, wherein the weight of the molten glass gobs (13) is determined using a high-speed camera (24) that obtains images of the molten glass gobs (13).

3. Method according to claim 2, wherein the weight of the molten glass gobs (13) is obtained by the following expression: $p = d * v$ where:
p is the weight of the molten glass gobs (13),
v is the volume of molten glass gobs (13) determined from images obtained with the high speed camera (24), and
d is the density of the molten glass.

4. Method according to claim 1, wherein the weight of the molten glass gobs (13) is determined according to the displacement of a punch (23) which forces the molten glass gobs (13) into one of the moulds (18) in which the glass containers (1) are formed.

5. Method according to any of the preceding claims, wherein a heating device (11) of the melting furnace (10) is activated to increase the temperature of the molten glass.

6. Method according to the preceding claim, wherein the heating device (11) is a burner or an electrode of the melting furnace (10).

7. Method according to any of the preceding claims, wherein a cooling device (26) of the melting furnace (10) is activated to decrease the temperature of the molten glass.

8. Method according to the preceding claim, wherein the cooling device (26) is a venting flap of the melting furnace (10) or a device for emitting cooling air into the melting furnace (10).

9. Method according to any of the preceding claims, wherein the vertical displacement of the rotating tube (19) is determined from a setpoint signal (s) generated by a control unit (25) which is sent to a motor (27) that moves the rotating tube (19) upwards or downwards.

10. Method according to any of the preceding claims, wherein the torque of the rotating tube (19) is determined from a torque signal (p) generated by a control unit (25) which is sent to a motor (30) that rotates the rotating tube (19) according to a predefined rotational speed.

11. System for adjusting the viscosity of molten glass during the formation of molten glass gobs (13) used for manufacturing glass containers (1), the system comprising:
- a melting furnace (10) for obtaining molten glass from raw materials,
- a channel (12) of the melting furnace (10) which directs the molten glass, through a variable size section (14), into a spout (15) having a feed plunger (16) to push the molten glass through an orifice (17) of the spout (15) to form the molten glass gobs (13) which are sent to moulds (18) for manufacturing the glass containers (1), wherein the variable size section (14) is modified with a rotating tube (19) which is vertically movable, and
- a control unit (25) configured to determine the weight of the molten glass gobs (13) and to maintain the weight of the molten glass gobs (13) in a predefined weight range by:
∘ a vertical displacement of the rotating tube (19) upwards, which increases the variable size section (14), when the weight of the molten glass gob (13) is below the predefined weight range, or
∘ a vertical displacement of the rotating tube (19) downwards, which decreases the variable size section (14), when the weight of the molten glass gob (13) is above the predefined weight range,
**characterised in that** the control unit (25) is additionally configured to determine the vertical displacement of the rotating tube (19), and
∘ increase the temperature of the molten glass, decreasing its viscosity, when the rotating tube (19) is moved vertically upwards, or
∘ decrease the temperature of the molten glass, increasing its viscosity, when the rotating tube (19) is moved vertically downwards, or
**in that** the control unit (25) is additionally configured to determine the torque of the rotating tube (19), and
∘ increase the temperature of the molten glass, decreasing its viscosity, when the rotating tube (19) rotates with a torque higher than a predefined torque, or
∘ decrease the temperature of the molten glass, increasing its viscosity, when the rotating tube (19) rotates at a torque lower than the predefined torque.

12. System according to claim 11, further comprising a high-speed camera (24) for obtaining images of the molten glass gobs (13), and wherein the control unit (25) is configured to determine the weight of the molten glass gobs (13) from the images obtained with the high-speed camera (24), the weight of the molten glass gobs (13) being obtained by the following expression: $p = d * v$ where:
p is the weight of the molten glass gobs,
v is the volume of the molten glass gobs determined from the images obtained with the high-speed camera, and
d is the density of the molten glass.

13. System according to claim 11, further comprising at least one punch (23) of one of the moulds (18) in which glass containers (1) are formed to force the introduction of molten glass gobs (13) into the mould (18), and wherein the control unit (25) is configured to determine the weight of the molten glass gobs (13) as a function of the displacement travelled by the punch (23) during the introduction of a molten glass gob (13) into a mould (18).

14. System according to any of claims 11 to 13, wherein the melting furnace (10) has a heating device (11) for increasing the temperature of the molten glass, the heating device (11) being preferably a burner or an electrode of the melting furnace (10).

15. System according to any of claims 11 to 14, wherein the melting furnace (10) has a cooling device (26) for lowering the temperature of the molten glass, the cooling device (26) being preferably a venting flap of the melting furnace (10) or a device for emitting cooling air into the melting furnace (10).

## Patentansprüche

1. Verfahren zur Einstellung der Viskosität von geschmolzenem Glas während der Formung von geschmolzenen Glastropfen (13), die zur Herstellung von Glasbehältern (1) verwendet werden, wobei das Verfahren Folgendes umfasst:
- Zuführen von Rohstoffen in einen Schmelzofen (10), um geschmolzenes Glas zu erhalten,
- Leiten des geschmolzenen Glases durch einen Abschnitt (14) mit variabler Größe in einen Auslauf (15) mit einem Zuführkolben (16), um das geschmolzene Glas durch eine Öffnung (17) des Auslaufs (15) zu drücken und so die geschmolzenen Glastropfen (13) zu formen, die zur Herstellung der Glasbehälter (1) in Formen (18) geleitet werden, wobei der Abschnitt (14) mit variabler Größe mit einem rotierenden Rohr (19) modifiziert ist, das vertikal beweglich ist,
- Bestimmen des Gewichts von geschmolzenen Glastropfen (13) und
- Halten des Gewichts der geschmolzenen Glastropfen (13) in einem vordefinierten Gewichtsbereich durch:
∘ eine vertikale Verschiebung des rotierenden Rohrs (19) nach oben, was den Abschnitt (14) mit variabler Größe vergrößert, wenn das Gewicht des geschmolzenen Glastropfens (13) unterhalb des vordefinierten Gewichtsbereichs liegt, oder
∘ eine vertikale Verschiebung des rotierenden Rohrs (19) nach unten, was den Abschnitt (14) mit variabler Größe verkleinert, wenn das Gewicht des geschmolzenen Glastropfens (13) oberhalb des vordefinierten Gewichtsbereichs liegt,
**dadurch gekennzeichnet, dass** das Verfahren ferner Folgendes umfasst:
- Bestimmen der vertikalen Verschiebung des rotierenden Rohrs (19) und
∘ Erhöhen der Temperatur des geschmolzenen Glases, wobei seine Viskosität verringert wird, wenn das rotierende Rohr (19) vertikal nach oben bewegt wird, oder
∘ Verringern der Temperatur des geschmolzenen Glases, wobei seine Viskosität erhöht wird, wenn das rotierende Rohr (19) vertikal nach unten bewegt wird, oder
- Bestimmen des Drehmoments des rotierenden Rohrs (19) und
∘ Erhöhen der Temperatur des geschmolzenen Glases, wobei seine Viskosität verringert wird, wenn das rotierende Rohr (19) mit einem Drehmoment rotiert, das höher ist als ein vordefiniertes Drehmoment, oder
○ Verringern der Temperatur des geschmolzenen Glases, wobei seine Viskosität erhöht wird, wenn das rotierende Rohr (19) mit einem Drehmoment rotiert, das niedriger ist als das vordefinierte Drehmoment.

2. Verfahren nach Anspruch 1, wobei das Gewicht der geschmolzenen Glastropfen (13) unter Verwendung einer Hochgeschwindigkeitskamera (24) bestimmt wird, die Bilder der geschmolzenen Glastropfen (13) aufnimmt.

3. Verfahren nach Anspruch 2, wobei das Gewicht der geschmolzenen Glastropfen (13) anhand des folgenden Ausdrucks ermittelt wird: $p = d * v$ wo:
p das Gewicht der geschmolzenen Glastropfen (13) ist,
v das Volumen der geschmolzenen Glastropfen (13) ist, das anhand von Bildern bestimmt wird, die mit der Hochgeschwindigkeitskamera (24) aufgenommen wurden, und
d die Dichte des geschmolzenen Glases ist.

4. Verfahren nach Anspruch 1, wobei das Gewicht der geschmolzenen Glastropfen (13) gemäß der Verschiebung eines Stempels (23) bestimmt wird, der die geschmolzenen Glastropfen (13) in eine der Formen (18) zwingt, in denen die Glasbehälter (1) geformt werden.

5. Verfahren nach einem der vorhergehenden Ansprüche, wobei eine Heizvorrichtung (11) des Schmelzofens (10) aktiviert wird, um die Temperatur des geschmolzenen Glases zu erhöhen.

6. Verfahren nach dem vorhergehenden Anspruch, wobei die Heizvorrichtung (11) ein Brenner oder eine Elektrode des Schmelzofens (10) ist.

7. Verfahren nach einem der vorhergehenden Ansprüche, wobei eine Kühlvorrichtung (26) des Schmelzofens (10) aktiviert wird, um die Temperatur des geschmolzenen Glases zu verringern.

8. Verfahren nach dem vorhergehenden Anspruch, wobei die Kühlvorrichtung (26) eine Entlüftungsklappe des Schmelzofens (10) oder eine Vorrichtung zum Emittieren von Kühlluft in den Schmelzofen (10) ist.

9. Verfahren nach einem der vorhergehenden Ansprüche, wobei die vertikale Verschiebung des rotierenden Rohrs (19) anhand eines von einer Steuereinheit (25) generierten Sollwertsignals (s) bestimmt wird, das an einen Motor (27) gesendet wird, der das rotierende Rohr (19) nach oben oder unten bewegt.

10. Verfahren nach einem der vorhergehenden Ansprüche, wobei das Drehmoment des rotierenden Rohrs (19) anhand eines von einer Steuereinheit (25) generierten Drehmomentsignals (p) bestimmt wird, das an einen Motor (30) gesendet wird, der das rotierende Rohr (19) mit einer vordefinierten Drehzahl dreht.

11. System zur Einstellung der Viskosität von geschmolzenem Glas während der Formung von geschmolzenen Glastropfen (13), die zur Herstellung von Glasbehältern (1) verwendet werden, wobei das System Folgendes umfasst:
- einen Schmelzofen (10) zur Gewinnung von geschmolzenem Glas aus Rohstoffen,
- einen Kanal (12) des Schmelzofens (10), der das geschmolzene Glas durch einen Abschnitt (14) mit variabler Größe in einen Auslauf (15) mit einem Zuführkolben (16) leitet, um das geschmolzene Glas durch eine Öffnung (17) des Auslaufs (15) zu drücken und so die geschmolzenen Glastropfen (13) zu formen, die zur Herstellung der Glasbehälter (1) in Formen (18) geleitet werden, wobei der Abschnitt (14) mit variabler Größe mit einem rotierenden Rohr (19) modifiziert ist, das vertikal beweglich ist, und
- eine Steuereinheit (25), die dazu konfiguriert ist, das Gewicht der geschmolzenen Glastropfen (13) zu bestimmen und das Gewicht der geschmolzenen Glastropfen (13) in einem vordefinierten Gewichtsbereich zu halten, durch:
∘ eine vertikale Verschiebung des rotierenden Rohrs (19) nach oben, was den Abschnitt (14) mit variabler Größe vergrößert, wenn das Gewicht des geschmolzenen Glastropfens (13) unterhalb des vordefinierten Gewichtsbereichs liegt, oder
∘ eine vertikale Verschiebung des rotierenden Rohrs (19) nach unten, was den Abschnitt (14) mit variabler Größe verkleinert, wenn das Gewicht des geschmolzenen Glastropfens (13) oberhalb des vordefinierten Gewichtsbereichs liegt,
**dadurch gekennzeichnet, dass** die Steuereinheit (25) zusätzlich dazu konfiguriert ist, die vertikale Verschiebung des rotierenden Rohrs (19) zu bestimmen, und
∘ Erhöhen der Temperatur des geschmolzenen Glases, wobei seine Viskosität verringert wird, wenn das rotierende Rohr (19) vertikal nach oben bewegt wird, oder
∘ Verringern der Temperatur des geschmolzenen Glases, wobei seine Viskosität erhöht wird, wenn das rotierende Rohr (19) vertikal nach unten bewegt wird, oder
**dass** die Steuereinheit (25) zusätzlich dazu konfiguriert ist, das Drehmoment des rotierenden Rohrs (19) zu bestimmen, und
∘ Erhöhen der Temperatur des geschmolzenen Glases, wobei seine Viskosität verringert wird, wenn das rotierende Rohr (19) mit einem Drehmoment rotiert, das höher ist als ein vordefiniertes Drehmoment, oder
∘ Verringern der Temperatur des geschmolzenen Glases, wobei seine Viskosität erhöht wird, wenn das rotierende Rohr (19) mit einem Drehmoment rotiert, das niedriger ist als das vordefinierte Drehmoment.

12. System nach Anspruch 11, ferner umfassend eine Hochgeschwindigkeitskamera (24) zum Aufnehmen von Bildern der geschmolzenen Glastropfen (13), und wobei die Steuereinheit (25) dazu konfiguriert ist, das Gewicht der geschmolzenen Glastropfen (13) anhand der mit der Hochgeschwindigkeitskamera (24) aufgenommenen Bilder zu bestimmen, wobei das Gewicht der geschmolzenen Glastropfen (13) anhand des folgenden Ausdrucks ermittelt wird: $p = d * v$ wo:
p das Gewicht der geschmolzenen Glastropfen ist,
v das Volumen der geschmolzenen Glastropfen ist, das anhand der Bilder bestimmt wird, die mit der Hochgeschwindigkeitskamera aufgenommen wurden, und
d die Dichte des geschmolzenen Glases ist.

13. System nach Anspruch 11, ferner umfassend mindestens einen Stempel (23) einer der Formen (18), in denen Glasbehälter (1) geformt werden, um das Einbringen von geschmolzenen Glastropfen (13) in die Form (18) zu erzwingen, und wobei die Steuereinheit (25) dazu konfiguriert ist, das Gewicht der geschmolzenen Glastropfen (13) abhängig von der Verschiebung zu bestimmen, die der Stempel (23) während des Einbringens eines geschmolzenen Glastropfens (13) in eine Form (18) zurücklegt.

14. System nach einem der Ansprüche 11 bis 13, wobei der Schmelzofen (10) eine Heizvorrichtung (11) zum Erhöhen der Temperatur des geschmolzenen Glases aufweist, wobei die Heizvorrichtung (11) vorzugsweise ein Brenner oder eine Elektrode des Schmelzofens (10) ist.

15. System nach einem der Ansprüche 11 bis 14, wobei der Schmelzofen (10) eine Kühlvorrichtung (26) zum Senken der Temperatur des geschmolzenen Glases aufweist, wobei die Kühlvorrichtung (26) vorzugsweise eine Entlüftungsklappe des Schmelzofens (10) oder eine Vorrichtung zum Emittieren von Kühlluft in den Schmelzofen (10) ist.

## Revendications

1. Procédé de réglage de la viscosité du verre en fusion lors de la formation de gouttes de verre en fusion (13) utilisées pour fabriquer des récipients en verre (1), le procédé comprenant:
- l'alimentation d'un four de fusion (10) en matières premières afin d'obtenir du verre en fusion,
- l'acheminement du verre en fusion, à travers une section de taille variable (14), jusque dans un avant-corps (15) comportant un piston d'alimentation (16) destiné à pousser le verre en fusion à travers un orifice (17) de l'avant-corps (15) afin de former les gouttes de verre en fusion (13), lesquelles sont envoyées dans des moules (18) pour fabriquer les récipients en verre (1), la section de taille variable (14) étant modifiée au moyen d'un tube rotatif (19) mobile verticalement,
- la détermination du poids des gouttes de verre en fusion (13), et
- le maintien du poids des gouttes de verre en fusion (13) dans une plage de poids prédéfinie par:
∘ un déplacement vertical vers le haut du tube rotatif (19), qui augmente la section de taille variable (14), lorsque le poids de la goutte de verre en fusion (13) est inférieur à la plage de poids prédéfinie, ou
∘ un déplacement vertical vers le bas du tube rotatif (19), qui diminue la section de taille variable (14), lorsque le poids de la goutte de verre en fusion (13) est supérieur à la plage de poids prédéfinie,
**caractérisé en ce que** le procédé comprend en outre:
- la détermination du déplacement vertical du tube rotatif (19), et
∘ l'augmentation de la température du verre en fusion, diminuant ainsi sa viscosité, lorsque le tube rotatif (19) est déplacé verticalement vers le haut, ou
∘ la diminution de la température du verre en fusion, augmentant ainsi sa viscosité, lorsque le tube rotatif (19) est déplacé verticalement vers le bas, ou
- la détermination du couple du tube rotatif (19), et
∘ l'augmentation de la température du verre en fusion, diminuant ainsi sa viscosité, lorsque le tube rotatif (19) tourne avec un couple supérieur à un couple prédéfini, ou
∘ la diminution de la température du verre en fusion, augmentant ainsi sa viscosité, lorsque le tube rotatif (19) tourne avec un couple inférieur au couple prédéfini.

2. Procédé selon la revendication 1, dans lequel le poids des gouttes de verre en fusion (13) est déterminé à l'aide d'une caméra à grande vitesse (24) qui acquiert des images des gouttes de verre en fusion (13).

3. Procédé selon la revendication 2, dans lequel le poids des gouttes de verre en fusion (13) est obtenu au moyen de l'expression suivante: $p = d * v$ où:
p est le poids des gouttes de verre en fusion (13),
v est le volume des gouttes de verre en fusion (13) déterminé à partir d'images acquises à l'aide de la caméra à grande vitesse (24), et
d est la masse volumique du verre en fusion.

4. Procédé selon la revendication 1, dans lequel le poids des gouttes de verre en fusion (13) est déterminé en fonction du déplacement d'un poinçon (23) qui force les gouttes de verre en fusion (13) à pénétrer dans l'un des moules (18) dans lesquels les récipients en verre (1) sont formés.

5. Procédé selon l'une quelconque des revendications précédentes, dans lequel un dispositif de chauffage (11) du four de fusion (10) est activé afin d'augmenter la température du verre en fusion.

6. Procédé selon la revendication précédente, dans lequel le dispositif de chauffage (11) est un brûleur ou une électrode du four de fusion (10).

7. Procédé selon l'une quelconque des revendications précédentes, dans lequel un dispositif de refroidissement (26) du four de fusion (10) est activé afin de diminuer la température du verre en fusion.

8. Procédé selon la revendication précédente, dans lequel le dispositif de refroidissement (26) est un volet d'aération du four de fusion (10) ou un dispositif destiné à émettre de l'air de refroidissement dans le four de fusion (10).

9. Procédé selon l'une quelconque des revendications précédentes, dans lequel le déplacement vertical du tube rotatif (19) est déterminé à partir d'un signal de consigne (s) généré par une unité de commande (25) et envoyé à un moteur (27) qui déplace le tube rotatif (19) vers le haut ou vers le bas.

10. Procédé selon l'une quelconque des revendications précédentes, dans lequel le couple du tube rotatif (19) est déterminé à partir d'un signal de couple (p) généré par une unité de commande (25) et envoyé à un moteur (30) qui fait tourner le tube rotatif (19) à une vitesse de rotation prédéfinie.

11. Système de réglage de la viscosité du verre en fusion lors de la formation de gouttes de verre en fusion (13) utilisées pour fabriquer des récipients en verre (1), le système comprenant :
- un four de fusion (10) destiné à obtenir du verre en fusion à partir de matières premières,
- un canal (12) du four de fusion (10), qui achemine le verre en fusion, à travers une section de taille variable (14), jusque dans un avant-corps (15) comportant un piston d'alimentation (16) destiné à pousser le verre en fusion à travers un orifice (17) de l'avant-corps (15) afin de former les gouttes de verre en fusion (13), lesquelles sont envoyées dans des moules (18) pour fabriquer les récipients en verre (1), la section de taille variable (14) étant modifiée au moyen d'un tube rotatif (19) mobile verticalement, et
- une unité de commande (25) configurée pour déterminer le poids des gouttes de verre en fusion (13) et pour maintenir le poids des gouttes de verre en fusion (13) dans une plage de poids prédéfinie par :
∘ un déplacement vertical vers le haut du tube rotatif (19), qui augmente la section de taille variable (14), lorsque le poids de la goutte de verre en fusion (13) est inférieur à la plage de poids prédéfinie, ou
∘ un déplacement vertical vers le bas du tube rotatif (19), qui diminue la section de taille variable (14), lorsque le poids de la goutte de verre en fusion (13) est supérieur à la plage de poids prédéfinie,
**caractérisé en ce que** l'unité de commande (25) est en outre configurée pour déterminer le déplacement vertical du tube rotatif (19), et pour
∘ augmenter la température du verre en fusion, diminuant ainsi sa viscosité, lorsque le tube rotatif (19) est déplacé verticalement vers le haut, ou
∘ diminuer la température du verre en fusion, augmentant ainsi sa viscosité, lorsque le tube rotatif (19) est déplacé verticalement vers le bas,
ou **en ce que** l'unité de commande (25) est en outre configurée pour déterminer le couple du tube rotatif (19), et pour
∘ augmenter la température du verre en fusion, diminuant ainsi sa viscosité, lorsque le tube rotatif (19) tourne avec un couple supérieur à un couple prédéfini, ou
∘ diminuer la température du verre en fusion, augmentant ainsi sa viscosité, lorsque le tube rotatif (19) tourne avec un couple inférieur au couple prédéfini.

12. Système selon la revendication 11, comprenant en outre une caméra à grande vitesse (24) destinée à acquérir des images des gouttes de verre en fusion (13), et dans lequel l'unité de commande (25) est configurée pour déterminer le poids des gouttes de verre en fusion (13) à partir des images acquises à l'aide de la caméra à grande vitesse (24), le poids des gouttes de verre en fusion (13) étant obtenu au moyen de l'expression suivante : $p = d * v$ où:
p est le poids des gouttes de verre en fusion,
v est le volume des gouttes de verre en fusion déterminé à partir des images acquises à l'aide de la caméra à grande vitesse, et
d est la masse volumique du verre en fusion.

13. Système selon la revendication 11, comprenant en outre au moins un poinçon (23) de l'un des moules (18) dans lesquels les récipients en verre (1) sont formés, destiné à forcer l'introduction des gouttes de verre en fusion (13) dans le moule (18), et dans lequel l'unité de commande (25) est configurée pour déterminer le poids des gouttes de verre en fusion (13) en fonction du déplacement parcouru par le poinçon (23) lors de l'introduction d'une goutte de verre en fusion (13) dans un moule (18).

14. Système selon l'une quelconque des revendications 11 à 13, dans lequel le four de fusion (10) comporte un dispositif de chauffage (11) destiné à augmenter la température du verre en fusion, le dispositif de chauffage (11) étant de préférence un brûleur ou une électrode du four de fusion (10).

15. Système selon l'une quelconque des revendications 11 à 14, dans lequel le four de fusion (10) comporte un dispositif de refroidissement (26) destiné à abaisser la température du verre en fusion, le dispositif de refroidissement (26) étant de préférence un volet d'aération du four de fusion (10) ou un dispositif destiné à émettre de l'air de refroidissement dans le four de fusion (10).
